(19) Europäisches Patentamt

European Patent Office

Office européen des brevets

(11) **EP 0 721 618 B1**

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int Cl.6: **G06F 7/00**

(21) Anmeldenummer: **94926781.9**

(22) Anmeldetag: **14.09.1994**

(86) Internationale Anmeldenummer:
**PCT/DE94/01059**

(87) Internationale Veröffentlichungsnummer:
**WO 95/08796 (30.03.1995 Gazette 1995/14)**

(54) **VERFAHREN ZUR BESCHLEUNIGTEN REGELAUSWERTUNG IN EINEM FUZZY-INFERENCE-PROZESSOR UND VORRICHTUNG ZU DESSEN DURCHFÜHRUNG**

PROCESS FOR ACCELERATED RULE EVALUATION IN A FUZZY INFERENCE PROCESSOR AND DEVICE FOR CARRYING IT OUT

PROCEDE D'EVALUATION ACCELEREE DE REGLES DANS UN PROCESSEUR A INFERENCE FLOUE ET DISPOSITIF DE MISE EN UVRE DUDIT PROCEDE

(84) Benannte Vertragsstaaten:
**DE FR GB IT**

(30) Priorität: **20.09.1993 DE 4331899**

(43) Veröffentlichungstag der Anmeldung:
**17.07.1996 Patentblatt 1996/29**

(73) Patentinhaber: **SIEMENS AKTIENGESELLSCHAFT 80333 München (DE)**

(72) Erfinder:
- **KÜNEMUND, Thomas, Dr. D-80337 München (DE)**
- **HENTSCHEL, Klaus D-84028 Landshut (DE)**

(56) Entgegenhaltungen:
**EP-A- 0 513 829**

- **IEEE INTERNATIONAL CONFERENCE ON FUZZY SYSTEMS, 8-12 MARCH 1992, SAN DIEGO, CA., USA, 1992, IEEE, NEW YORK, NY, USA. Seiten 537 - 544, XP000342918 H. IKEDA ET AL. 'A Fuzzy Inference Coprocessor Using a Flexible Active-Rule-Driven Architecture'**
- **IEEE INTERNATIONAL CONFERENCE ON FUZZY SYSTEMS, 8-12 MARCH 1992, SAN DIEGO, CA., USA, 1992, IEEE, NEW YORK, NY, USA. Seiten 1317 - 1323, XP000343007 H. EICHFELD 'Architecture for a CMOS Fuzzy Logic Controller with optimized memory organisation and operator design'**

**Beschreibung**

Eine einzelne Regel weist einen Bedingungteil mit je einer Teilbedingung für jede Eingangsvariable und einen Folgeteil mit einer Zuweisung eines linguistischen Wertes für die jeweilige Ausgangsvariable auf. Eine Regelauswertung besteht im Prinzip darin, zu überprüfen, ob die Teilbedingungen einer jeden Regel für alle einzelnen Eingangsvariablen erfüllt sind oder nicht, und, gemäß einer jeweiligen Regel, der Ausgangsvariablen einen bestimmten linguistischen Wert zuzuordnen.

Dokument IEEE INTERNATIONAL CONFERENCE ON FUZZY SYSTEMS, 8-12 March 1992, SAN DIEGO, CA., USA, 1992, IEEE, NEW YORK, NY, USA. Seiten 537-544, H. IKEDA ET AL. 'A Fuzzy Inference Coprocessor using a flexible Active-Rule-Driven Architecture' offenbart ein Fuzzy-Inferenz-System wobei aktive Regeln (Regeln deren IF-Teil-Grade nicht alle Null sind für gegebener Eingangsdaten) am Anfang der Fuzzy-Inferenz aufgefunden werden können.

Die Aufgabe der Erfindung liegt nun darin, ein Verfahren und eine Vorrichtung zu dessen Durchführung anzugeben, die in einem Fuzzy-Inference-Prozessor eine beschleunigte Regelauswertung ermöglichen.

Die Aufgabe wird hinsichtlich des Verfahrens durch die im Patentanspruch 1 angegebenen Merkmale und hinsichtlich der Vorrichtung zu dessen Durchführung durch die Merkmale des vom Patentanspruch 1 abhängigen Patentanspruch 2 gelöst.

Die Ansprüche 3 bis 6 beziehen sich auf vorteilhafte Ausbildungen der Vorrichtung.

Die Erfindung wird nachfolgend anhand der Zeichnung näher erläutert. Dabei zeigt

Figur 1 ein Übersichtsschaltbild mit der erfindungsgemäßen Vorrichtung und weitere Einheiten eines Fuzzy-Inference-Prozessors,

Figur 2 eine Darstellung zur Erläuterung des erfindungsgemäßen Verfahrens,

Figur 3 eine Darstellung zur Erläuterung der Speicherorganisation in einem Adreßspeicher der erfindungsgemäßen Vorrichtung,

Figur 4 eine Detailschaltung einer in Figur 1 enthaltenen Einrichtung zur Erkennung betroffener Regelsegmentworte,

Figur 5 eine Detailschaltung einer in Figur 1 enthaltenen Ausblendeinrichtung und

Figur 6 eine Detailschaltung einer in Figur 1 enthaltenen Adreßbildungseinheit.

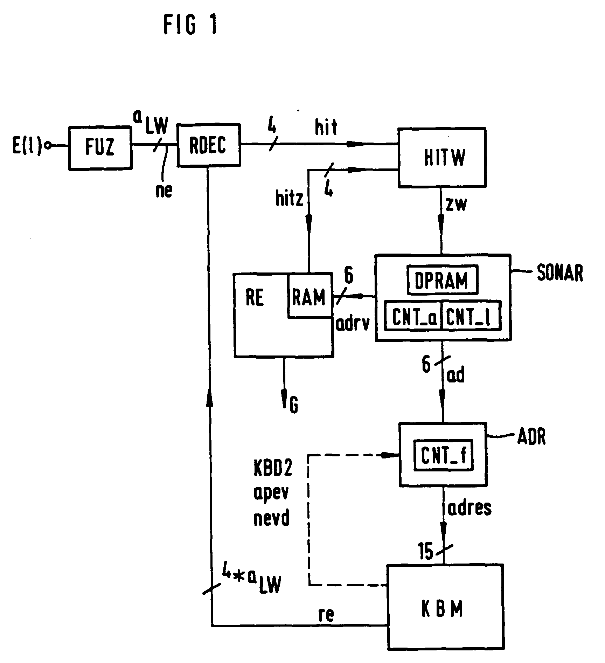

In Figur 1 ist ein Blockschaltbild gezeigt, das neben einer erfindungsgemäßen Vorrichtung, einen Wissensbasisspeicher KBM, einen Regeldecoder REDEC, eine Regelauswertungsschaltung RE mit einem Schreib/Lese-Speicher RAM und eine Fuzzifikationsschaltung FUZ enthält. Die erfindungsgemäße Vorrichtung weist eine Ausblendeinrichtung SONAR (screening of not active rules) mit einem Adreßspeicher DPRAM auf. Der Adreßspeicher DPRAM besteht wegen des geringen Chipflächenbedarfs vorzugsweise aus einem Schreib/Lese-Speicher mit einem getrennten Datenausgang und Dateneingang (dual ported RAM), kann aber beispielsweise auch aus einem entsprechend geschalteten Schieberegister bestehen. Die Ausblendeinrichtung SONAR enthält darüber hinaus einen Zähler $CNT\_a$ für den Ausgabezeiger und einen Zähler $CNT\_e$ für einen Eingabezeiger. In der Ausblendeinrichtung SONAR wird eine Relativadresse ad für ein jeweiliges Regelsegmentwort und eine verzögerte Relativadresse adrv für das jeweilige Regelsegmentwort erzeugt. Die verzögerte Relativadresse adrv ist dabei abhängig von einem Steuersignal zw in den Adreßspeicher DPRAM einschreibbar. Sind beispielsweise wie hier 64 Regelsegmentworte vorgesehen und zu adressieren, so ist die Relativadresse ad und die verzögerte Relativadresse adrv jeweils 6 Bit breit.

In der Adreßbildungseinheit ADR befindet sich ein Zähler $CNT\_f$ zur Adressierung der jeweiligen Eingangsvariablen. Die Adressierungseinheit ADR erhält neben der Relativadresse ad Angaben wie die Startadresse KBD2, die Anzahl apev der Blocksegmentworte und die Anzahl der nev der Eingangsvariablen und bildet daraus die absolute Adresse adres, die beispielsweise hier 15 Bit breit ist. Die Startadresse KBD2, die Anzahl apev und die Anzahl nev stammen aus dem Wissensbasisspeicher KBM; dieser Zusammenhang ist in Figur 1 gestrichelt angedeutet.

Der durch die absolute Adresse adres adressierte Wissensbasisspeicher KBM liefert zu den der jeweiligen Regelsegmenten entsprechenden Regeln Nummern re für linguistische Werte der zum Regelsegmentwort gehörenden Eingangsvariablen.

In der Regeldecoderschaltung RDEC werden Nummern ne aus der Fuzzifikationsschaltung FUZ mit den Nummern re aus dem Wissensbasisspeicher KBM verglichen und Treffersignale gebildet. In dem hier verwendeten Beispiel werden vier Nummern re mit der jeweiligen Auflösung $a_{LW}$ jeweils mit den Nummern ne verglichen, wobei die Nummern ne ebenfalls die Auflösung $a_{LW}$ besitzen, und daraus vier 1 Bit breite Treffe signale hit erzeugt. Zur Erzeugung der Nummern ne werden der Fuzzifikationsschaltung FUZ scharfe Eingangswerte E (1) zugeführt. In der Einrichtung HITW zur Erkennung weiterhin relevanter Regelsegmentworte ist abhängig von den Treffersignalen hit ein Steuersignal zw für die Ausblendeinrichtung SONAR bildbar.

Bei einer vorteilhaften Ausgestaltung der erfindungsgemäßen Vorrichtung sind der Einrichtung HITW, neben den Treffersignalen hit, auch Treffersignale hitp für bisherige Eingangsvariable zuführbar und daraus neben dem Steuersignal zw, neue Treffersignale hitz, in denen nun auch die Treffersignale hit berücksichtigt sind, bildbar. Die Treffersignale hitp der bisherigen Eingangsvariablen sind dabei aus einem Schreib/Lese-Speicher auslesbar und die neuen Treffersignale hitz in diesem zurückschreibbar, wobei eine Adressierung des Schreib/Lese-Speichers vorteilhafterweise durch die verzögerte Relativadresse adrv aus der Ausblendeinrichtung SONAR verwendet wird. Da die Regelauswertungsschaltung re ohnehin einen Schreib/Lese-Speicher für die Zwischenspeicherung von Minima enthält, der vorteilhafterweise ebenfalls durch die verzögerte Relativadresse adrv adressierbar ist, können die Treffersignale hitz mit Vorteil im Schreib/Lese-Speicher RAM der Regelauswertung RE durch Vergrößerung der Wortbreite, hier um 4 Bit vergrößert, gespeichert werden. Alternativ hierzu wäre denkbar, daß die Treffersignale hitz in einem separaten Schreib/Lese-Speicher gespeichert werden und eine getrennte Adressierung erfolgt.

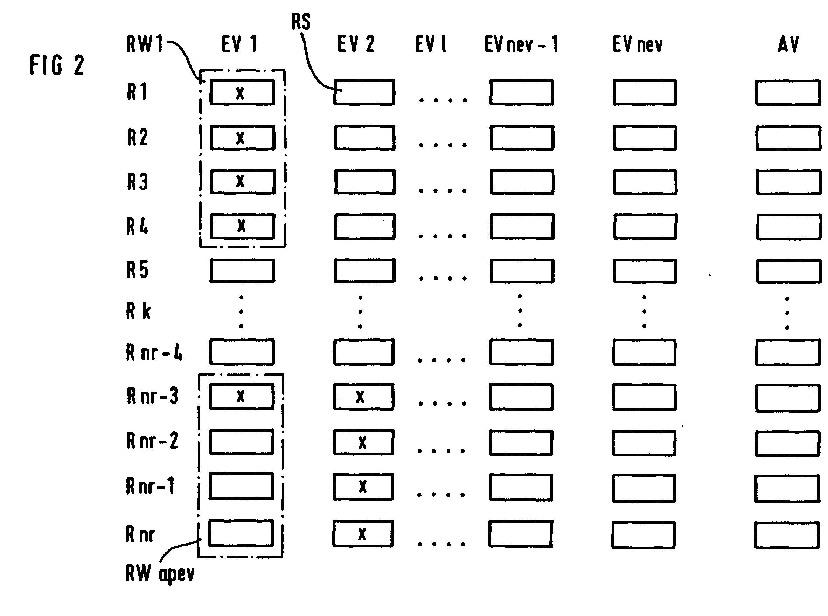

Zur Erläuterung des erfindungsgemäßen Verfahrens sind in Figur 2 Regeln R1 ... R5 ... Rk ... Rnr-4 ... Rnr zeilenweise dargestellt, wobei für jede der Eingangsvariablen EV1, EV2 ... EV1 ... EVnev-1, EVnev sowie für die Ausgangsvariable AV ein Regelsegment RS vorgesehen ist. Die Regelsegmente für die Eingangsvariablen enthalten dabei Nummern für vorgegebene linguistische Werte der jeweiligen Eingangsvariablen im Bedingungsteil der jeweiligen Regel und die Regelsegmente für die Ausgangsvariablen enthalten Nummern für linguistische Werte der Ausgangsvariablen im Folgeteil der jeweiligen Regel. Von wesentlicher Bedeutung für das erfindungsgemäße Verfahren ist dabei, daß zunächst alle Regelsegmente der Eingangsvariablen EV1 abgearbeitet werden, wobei die zur Eingangsvariablen EV1 gehörigen Regelsegmente daraufhin überprüft werden, ob die durch sie definierten Teilbedingungen der Regeln erfüllt sind oder nicht. Ist ein Regelsegment einer Regel nicht erfüllt, so ist die gesamte Regel nicht erfüllt, da alle im Bedingungsteil einer Regel vorkommenden logisch UND-verknüpften Eingangsvariablen durch je genau einen linguistischen Wert bzw. genau ein Regelsegment vertreten sind. Nachdem alle Regelsegmente der Eingangsvariablen EV1 abgearbeitet sind, erfolgt eine Umschaltung auf die nächste Eingangsvariable EV2 und es werden nach dem erfindungsgemäßen Verfahren im allgemeinen nicht mehr alle Regelsegmente der Eingangsvariablen EV2 abgearbeitet, sondern nur noch diejenigen, bei denen das Regelsegmentwort der vorhergehenden Eingangsvariable EV1, das im einfachsten Fall aus einem einzigen Regelsegment besteht, erfüllt war. Bei der Eingangsvariablen EV1 werden nur noch die Regelsegmente überprüft, bei denen die Eingangsvariable EV1-1 ... EV1 alle erfüllt waren. Dies wird entsprechend fortgesetzt bis die Eingangsvariable EV1 der Eingangsvariablen EVnev entspricht.

Beispielhaft sind in Figur 2 die Regelsemente für die Eingangsvariable EV1 und die Regeln R1 ... R4 sowie Rnr-3 durch Kreuze gekennzeichnet, die bedeuten, daß diese Regelsegmente nicht erfüllt sind. Entsprechenderweise sind die für die Eingangsvariable EV2 und die Regeln Rnr-3 ... Rnr geltenden Regelsegmente als nicht erfüllt gekennzeichnet. Werden beispielsweise Regelsegmentworte mit nur einem Regelsegment verwendet, so scheiden die Regeln R1 ... R4 sowie Rnr-3 bei der Abarbeitung der Regeln für die Eingangsvariable EV2 aus. Werden jedoch, wie auch in Figur 1 beispielhaft dargestellt, Regelsegmentworte RW1 ... RWapev mit jeweils vier Regelsegmenten verwendet, erfolgt also eine Parallelverarbeitung von vier Regelsegmenten, so können die Regeln R1 ... R4 bei der Abarbeitung der Eingangsvariablen EV unberücksichtigt bleiben, da alle Regelsegmente des Regelsegmentwortes RW1 nicht zutreffen, die Regel Rnr-3 muß hingegen bei der Bearbeitung der Eingangsvariablen EV2 berücksichtigt werden, da nur das durch die Eingangsvariable EV1 und die Regel Rnr-3 bestimmte Regelsegment innerhalb des Regelsegmentwortes RWapev nicht zutrifft. Regelsegmentworte mit einer geringeren Anzahl von Regelsegmenten bringen im allgemeinen einen höheren Einsparungseffekt bezüglich des erfindungsgemäßen Verfahrens.

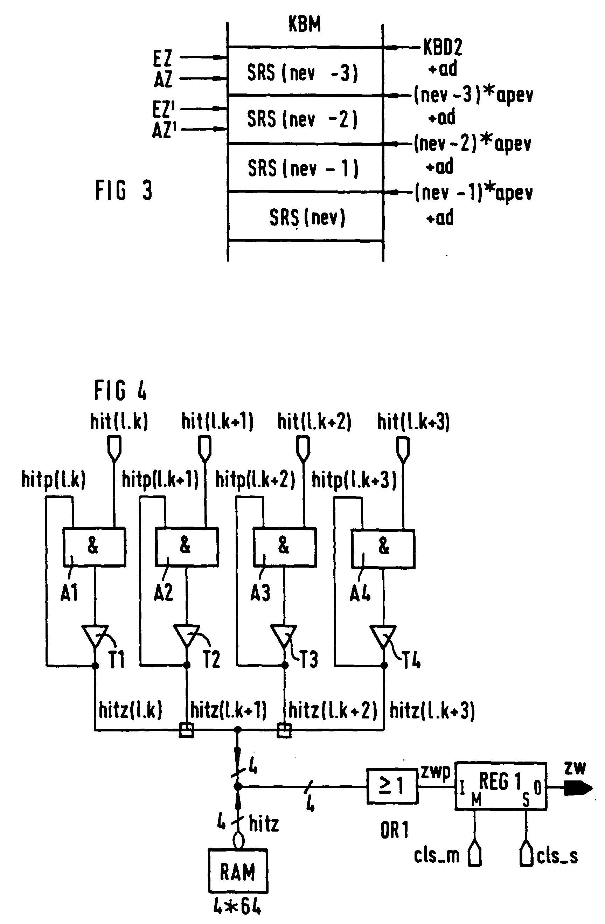

In Figur 3 ist ein Ausschnitt des Wissensbasisspeichers KBM ab der Startadresse KBD2 für nev = 4 dargestellt. Für die Eingangsvariable EV1 ist ein Satz von Regelsegmenten SRS (nev), für die Eingangsvariable EV2 ein Satz SRS (nev-1), für die Eingangsvariable EV3 ein Satz von Regelsegmenten SRS (nev-2) und für die Eingangsvariable EV4 ein Satz von Regelsegmenten SRS (nev-3) gezeigt. Die Startadresse ist zugleich der Beginn des Satzes SRS (nev-3), der Beginn des Satzes SRS (nev-2) wird durch Addition der Relativadresse (nev-3) * apev zur Festlegung der Eingangsvariablen, der Beginn des Satzes SRS (nev-1) durch Addition der Relativadresse (nev-2) * apev zur Startadresse und der Beginn für den Satz SRS (nev) durch Addition der Relativadresse (nev-1) * apev zur Festlegung der Eingangsvariablen zur Startadresse KBD2 festgelegt. Eine Adressierung innerhalb der Sätze von Regelsegmenten erfolgt durch Addition der jeweiligen Relativadresse ad zur Adressierung einzelner Regelsegmentwörter. Beispielhaft sind ein Eingangszeiger EZ und ein Ausgangszeiger AZ, die auf Regelsegmentwörtern im Satz von Regelsegmenten SRS (nev-3) und Zeiger EZ' und AZ', die auf Regelsegmentworte im Satz SRS (nev-2) zeigen, eingetragen.

Figur 4 zeigt eine Detailschaltung der Einrichtung HITW zur Erkennung weiterhin relevanter Regelsegmentwörter, bei der beispielsweise vier Treffersignale hit (l, k) ... hit (l, k+3)) mit Treffersignalen hitp aus dem Schreib/Lese-Speicher RAM, der beispielsweise 4 * 64 Bit umfaßt, verarbeitet sind, wobei das Steuersignal zw erzeugt wird. Hierzu wird einem ersten Eingang einer UND-Schaltung Al ein Treffersignal hit (l, k), einem ersten Eingang einer UND-Schaltung A2 das Treffersignal hit (l, k+1), einem ersten Eingang einer UND-Schaltung A3 das Treffersignal hit (l, k+2) und einem ersten Eingang der UND-Schaltung A4 das Treffersignal hit (l, k+3) zugeführt. Ein zweiter Eingang der UND-Schaltung Al führt ein Treffersignal hitp (l, k), ein zweiter Eingang der UND-Schaltung A2 ein Treffersignal hitp (l, k+1), ein zweiter Eingang der UND-Schaltung A3 ein Treffersignal hitp (l, k+2) und ein zweiter Eingang der UND-Schaltung A4 ein Treffersignal hitp (l, k+3). Die Treffersignale hitp (l, k) ... hitp (l, k+3) können über einen bidirektionalen Datenbus aus dem Schreib/Lese-Speicher RAM ausgelesen, mit den Treffersignalen hit (l, k) ... hit (l, k+3) UND-verknüpft und über Treiberschaltungen T1 ... T4 als Treibersignal hitz (l, k) ... hitz (l, k+3) in den Schreib/Lese-Speicher RAM zurückgeschrieben werden. Aufgrund der gegebenen Signalverhältnisse treten keine Rückkopplungen bzw. Schwingungen auf und es kann eine Entkopplung der Signale hitp und hitz durch Halteglieder entfallen. Da die Treffersignale jeweils nur 1 Bit breit sind, besteht eine Minimumverknüpfung nur aus einer UND-Schaltung. Die vier 1 Bit breiten Treffersignale hitz (l, k) ... hitz (l, k+3) werden in einer ODER-Schaltung OR1 zu einem Signal zwp verknüpft, das einem Eingang eines Registers REG1 zuführbar ist, an dessen Ausgang das Steuersignal zw entnehmbar ist. Das Register REG1 arbeitet nach dem sogenannten Master-Slave-Prinzip, wobei der Master M ein Taktsignal cls_m und der Slave S ein Taktsignal cls_s erhält.

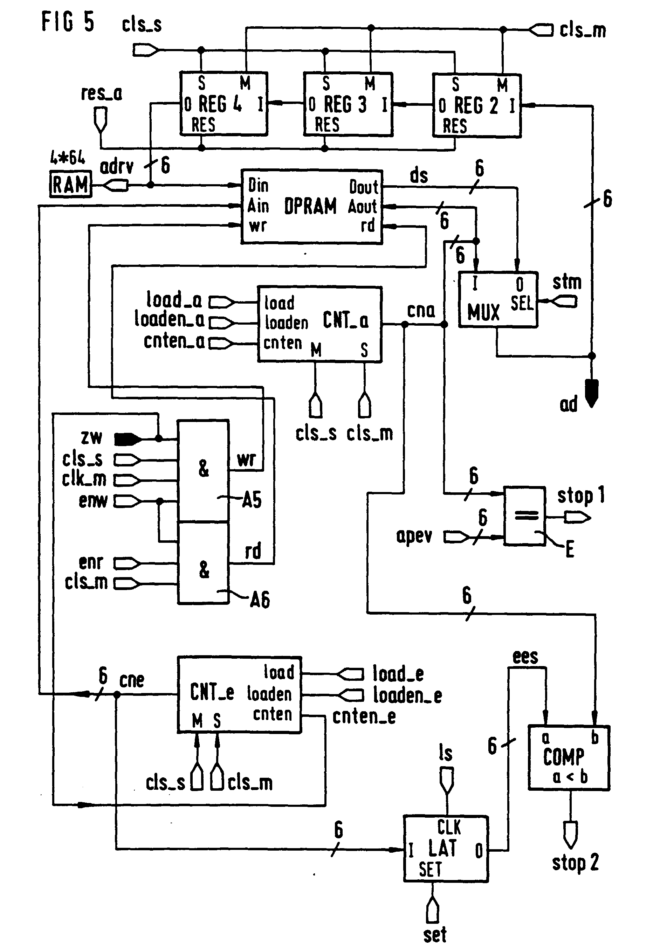

Figur 5 zeigt eine Detailschaltung der Ausblendeinrichtung SONAR, die einen Adreßspeicher DPRAM in Form eines Dual-ported-RAM aufweist dessen Dateneingang Din die verzögerte Relativadresse adrv erhält, die durch drei in Reihe geschaltete Register REG2 ... REG4 aus der Relativadresse ad für das jeweilige Regelsegmentwort bildbar ist, dessen Eingabeadreßeingang $A_{in}$ ein Ausgangssignal cne des Zählers CNT_e für den Eingabezeiger zuführbar ist, dessen Datenausgang $D_{out}$ mit einem Null-Eingang eines Multiplexers MUX verbunden ist, dessen Ausgabeadreßeingang ein Ausgangssignal cna des Zählers CNT_a für den Ausgabezeiger zuführbar ist und dessen Ausgabeadreßeingang mit einem Eins-Eingang des Multiplexers MUX verbunden ist, dessen Ausgang die Relativadresse ad für das jeweilige Regelsegmentwort führt. Ein Schreibsignal wr, das das Einschreiben der verzögerten Relativadresse adrv in den Adreßspeicher DPRAM ermöglicht, ist in Abhängigkeit des Steuersignals zw bildbar, wobei das Steuersignal zw einen ersten Eingang einer UND-Schaltung A5, ein Taktsignal cls_s einem zweiten Eingang der UND-Schaltung A5 ein Taktsignal clk_m einem dritten Eingang der UND-Schaltung A5 und ein Schreibaktivierungssignal enw einem vierten Eingang der UND-Schaltung A5 zuführbar ist. Ein Lesesignal rd liegt am Ausgang einer UND-Schaltung A6, deren erster Eingang mit dem Taktsignal clk_m, ein zweiter Eingang mit dem Taktsignal cls_m und ein dritter Eingang mit einem Leseaktivierungssignal enr versorgbar ist. Das Taktsignal clk_m hat dabei die doppelte Taktfrequenz als das Signal cls_s. Der Zähler CNT_a arbeitet nach dem Master-Slave-Prinzip, kann auf einen vorgegebenen Wert load-a geladen werden, sobald ein Ladeaktivierungssignal loaden_a anliegt, und zählen, sobald ein Zähleraktivierungssignal cnten_a anliegt. Der Takteingang für den Master führt das Signal cls_s und der Eingang für den Slave S führt den Takt cls_m. Entsprechendes gilt für den Zähler CNT_e, dem ein Ladesignal load_e, ein Ladeaktivierungssignal loaden_e und ein Zähleraktivierungssignal cnten_e zuführbar sind wobei letzteres Signal dem Steuersignal zw entspricht. Der Master-Anschluß M und der Slave-Anschluß S sind bei beiden Zählern gleich beschaltet. Zur Erzeugung eines ersten Stopsignals stopl ist eine Identitätsvergleicherschaltung E vorgesehen, deren erster Eingang mit dem Ausgang des Zählers CNT_a verbunden ist und dessen zweitem Eingang die Anzahl apev der Regelsegmentworte für eine Eingangsvariable zuführbar ist. Ferner ist in der Ausblendeinrichtung SONAR ein Halteglied LAT vorgesehen, an dessen Eingang das Ausgangssignal cne des Zählers für den Eingabezeiger liegt und dessen Ausgang ein Ausgangssignal ees führt, dem der Wert für die jeweils letzte Eingabezeigerposition vor einem Wechsel zur nächsten Eingangsvariablen entspricht. Das Halteglied LAT ist durch ein Taktsignal ls getaktet und durch ein Setzsignal set setzbar. Zur Erzeugung eines zweiten Stopsignals stop2 ist ein Kleiner-Komparator (COMP) mit der Vergleichsbedingung a < b vorgesehen, dessen a-Eingang das Signal ees, dessen b-Eingang das Ausgangssignal cna des Zählers CNT_a für den Ausgabezeiger erhält und an dessen Ausgang das zweite Stopsignal stop2=1 bildbar ist, wenn eine jeweilige Eingangsvariable abgearbeitet ist.

Je nachdem, ob das Steuersignal zw gleich 1 oder zw gleich 0 ist, wird die zum Auslesen des aktuellen Regelsegmentwortes erforderlich gewesene relative Adresse ad zurückgeschrieben oder nicht. Hierfür sorgt das gesetzte oder rückgesetzte Schreibsignal wr. Im Falle des Rückschreibens ist durch das Steuersignal zw = 1 sichergestellt, daß bei der nächsten steigenden Master-Flanke der Eingabezähler um einen Takt hochzählt, um den als nächstes zu beschreibenden Speicherbereich im Adreßspeicher DPRAM zu adressieren. Der am Ende der Abarbeitung eines Satzes von Regelsegmenten bzw. einer Eingangsvariablen vorhandene Zählerstand des Eingabezählers wird jeweils durch Aktivieren des Signals ls in das Halteglied LAT geschrieben. Dieser Wert dient als Endmarke für den Zählerstand des Ausgabezählers im darauffolgenden Zyklus. Das Ausgangssignal ees des Halteglieds LAT ist einem letzten Eingang des Kleiner-Komparator COMP zuführbar, an dessen zweitem Eingang der Ausgang cna des Ausgabezahlers CNA_a liegt. Für die Bedingung cna < ees befindet sich die Regelauswertung im Stadium der Abarbeitung eines Satzes von Regelsegmenten und das Ausgangssignal stop2 des Kleiner-Komparators COMP ist Null. Für den Zustand Stopsignal stop2 gleich 1 wird, stop2 gleich 1 gleich 1 wird, in allen Zyklen, außer im ersten, einem Steuerwerk mitgeteilt, ob die Bearbeitung eines Satzes von Regelsegmenten fertig ist oder nicht. Sind dagegen alle Regelsegmentwörter der ersten Eingangvariablen verarbeitet, geht das erste Stopsignal stop1 auf 1. Das Stopsignal stop1 zeigt an, daß die Bedingungen cna = apev erfüllt ist, das heißt, daß der Ausgabezähler auf die maximale Anzahl der adressierbaren Regelsegmentwörter innerhalb eines Satzes von Regelsegmenten hochgezählt hat. Es sei noch erwähnt, daß im Adreßspeicher DPRAM keine Zugriffskonflikte, das heißt gleichzeitiges Lesen und Schreiben bei derselben Adresse, auftreten können, da das Schreibsignal wr als Folge des Steuersignals zw erst mit drei Takten Verzögerung zur ausgelesenen relativen Adresse auftrifft.

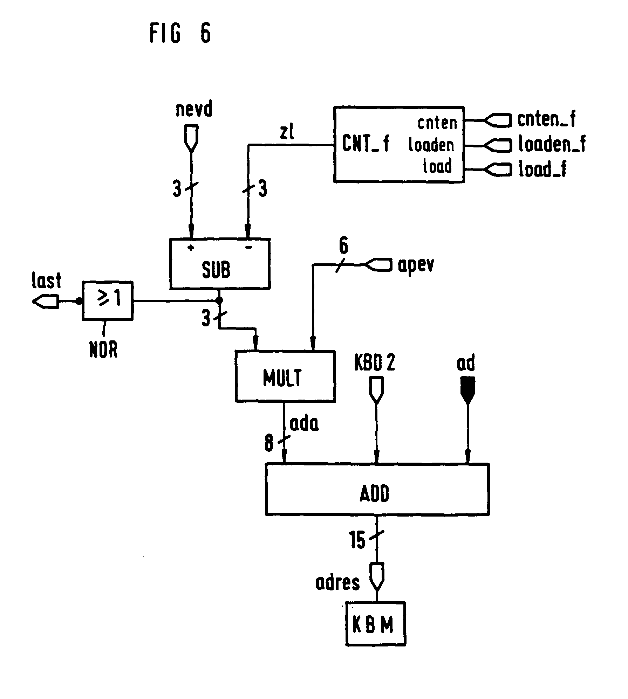

In Figur 6 ist eine Detailschaltung der Adreßbildungseinheit ADR dargestellt, in der die Absolutadresse nach folgender Gleichung gebildet wird:

$$adres = KBD2 + (nev - 1) * apev + ad$$

Die Adreßbildungseinheit ADR enthält hierzu den Zähler CNT_f, einen Subtrahierer SUB, einen Multiplizierer MULT und einen Addierer ADD und optional eine NOR-Schaltung NOR. Der Zähler CNT_f besteht beispielsweise aus einem 3 Bit Vorwartszähler, der über einen Ladeeingang load_f auf Eins vorladbar ist, sofern ein Ladeaktivierungssignal loaden_f anliegt, und der zählt, sofern ein Zähleraktivierungssignal cnten_f anliegt. Der Zähler CNT_f liefert an seinem Ausgang ein Signal zl für den Minuseingang des Substrahierers SUB. Dem Pluseingang des Subtrahierers SUB wird die Anzahl nev der Eingangsvariablen zugeführt, wobei die Anzahl nev beispielsweise ebenfalls 3 Bit aufweist. Das Ausgangssignal des Substrahierers SUB ist beispielsweise 3 Bit breit und wird einem Eingang des Multiplizierers MULT zugeführt, dessen weiterer Eingang beispielsweise ein 6 Bit breites Signal für die Anzahl apev der Regelsegmentwörter einer Eingangsvariablen erhält. Am Ausgang des Multiplizierers MULT wird eine relative Startadresse ada zur Adressierung eines die Regelsegmentwörter der jeweiligen Eingangsvariablen enthaltenden Speicherbereiches gebildet und einem ersten Eingang der Addiererschaltung ADD zugeführt, wobei die Relativadresse ada beispielsweise eine Wortbreite von 8 Bit aufweist. Einem zweiten Eingang der Addiererschaltung wird die Startadresse KBD2 und einem dritten Eingang der Addiererschaltung wird die Relativadresse ad zur Adressierung des jeweiligen Regelsegmentwortes zugeführt und am Ausgang des Addierers ADD liegt dabei die absolute Adresse adres zur Adressierung des Wissensbasisspeichers KBM an, die beispielsweise eine Wortbreite von 15 Bit aufweist. Der Zähler CNT_f wird jedesmal aktiviert, wenn jeweils alle gültigen Regelsegmentworte einer jeweiligen Eingangsvariablen abgearbeitet wurden und in der Ausblendeinrichtung SONAR die Stopsignale stopl oder stop2 auf Eins gesetzt werden.

Vorteilhafterweise kann eine NOR-Schaltung NOR vorgesehen werden, mit deren Hilfe das Ausgangssignal der Subtrahiererschaltung SUB bitweise zu einem Signal last zur Feststellung der letzten Eingangsvariablen verknüpfbar ist. Für den Fall, daß das Signal last gleich 1, das Stopsignal stop gleich 1 oder das Stopsignal stop2 gleich 1 ist, wird die Abarbeitung der insgesamt nev Eingangsvariablen beendet.

Beim erfindungsgemäßen Verfahren wird in einem ersten Schritt die Relativadresse ada zur Adressierung des zur jeweiligen Eingangsvariablen gehörenden Speicherbereichs so erzeugt, daß eine erste Eingangsvariable adressiert, ein erster Wert für eine maximale Eingabezeigerposition der jeweils vorhergehenden Eingangsvariablen gleich der Anzahl apev aller Regelsegmentworte RW1 ... RWapev gesetzt, da für die erste Eingangsvariable keine vorhergehende Eingangsvariable existiert, und der Adreßspeicher DPRAM mit Relativadressen aller Regelsegmentwörtern geladen wird. In einem darauffolgenden zweiten Schritt des erfindungsgemäßen Verfahrens wird der Eingabezeiger EZ und der Ausgabezeiger AZ so eingestellt, daß jeweils eine erste Zelle des Adreßspeichers, also ein erstes Regelsegmentwort der jeweiligen Eingangsvariablen, adressiert wird. Mit einem dritten Schritt wird die jeweilige Relativadresse ad zur Adressierung von Regelsegmentwörtern aus der durch den Ausgabezeiger adressierten Speicherzelle des Adreßspeichers ausgelesen und anschließend die Ausgabezeigerposition um eine Zelle des Adreßspeichers, also um ein Regelsegmentwort, weitergeschaltet. In einem vierten Schritt wird aus der jeweiligen Relativadresse ad zur Adressierung von Regelsegmentwörtern, der Startadresse KBD2 und der relativen Startadresse ada die absolute Adresse adres eines jeweiligen Regelsegmentwortes gebildet, wobei ein einzelnes Regelsegment einem linguistischen Wert der jeweiligen Eingangsvariablen im Bedingungteil der jeweiligen Regel entspricht. In einem fünften Schritt des erfindungsgemäßen Verfahrens wird die jeweilige Relativadresse ad zur Adressierung eines jeweiligen Regelsegmentwortes nur dann in die durch den Eingabezeiger adressierte Zelle des Adreßspeichers zurückgeschrieben und anschließend die Eingabezeigerposition nur dann um eine Zelle des Adreßspeichers weitergeschaltet, wenn mindestens eine der durch das jeweilige adressierte Regelsegmentwort definierten Bedingungen für die jeweilige Eingangsvariable erfüllt ist. In einem sechsten Schritt werden die Schritte drei bis fünf wiederholt, bis der Wert des Ausgabezeigers den Wert der maximalen Eingabezeigerposition der jeweils vorhergehenden Eingangsvariablen erreicht hat und dann der jeweilige Wert der maximalen Eingangszeigerposition der jeweils vorhergehenden Eingangsvariablen auf den Wert der jeweiligs letzten aktuellen Eingabezeigerposition gesetzt wird und die Relativadresse ada zur Adressierung der jeweiligen Eingangsvariable so erhöht wird, daß die jeweils nächste Eingangsvariable adressiert wird. Die Schritte 2 bis 6 werden durchgeführt bis alle nev Eingangsvariable abgearbeitet sind.

**Patentansprüche**

1. Verfahren zur beschleunigten Regelauswertung,

bei dem in einem ersten Schritt eine Relativadresse (ada) zur Adressierung eines zu jeweiligen Eingangsvariablen gehörenden Speicherbereichs so erzeugt wird, daß eine erste Eingangsvariable adressiert, ein Wert für eine maximale Eingabezeigerposition der jeweils vorhergehenden Eingangsvariablen gleich der Anzahl (apev) aller Regelsegmentworte (RW1 ... RWapev) gesetzt und ein Adreßspeicher (DPRAM) mit Relativadressen aller Regelsegmentworte geladen wird, wobei sich ein Regelsegmentwort aus mindestens einem Regelsegment zusammensetzt,

bei dem in einem zweiten Schritt ein Eingabezeiger (EZ) und ein Ausgabezeiger (AZ) so eingestellt werden, daß jeweils eine erste Zelle des Adreßspeichers adressiert wird,

bei dem in einem dritten Schritt eine jeweilige Relativadresse (ad) zur Adressierung eines Regelsegmentwortes aus der durch den Ausgabezeiger adressierten Speicherzelle des Adreßspeichers ausgelesen und anschließend die Position des Ausgabezeigers um eine Zelle des Adreßspeichers weitergeschaltet wird,

bei dem in einem vierten Schritt aus der jeweiligen Relativadresse (ad) zur Adressierung eines Regelsegmentwortes, einer Startadresse (KBD2) und einer relativen Startadresse (ada) eines die Regelsegmentwörter der jeweiligen Eingangsvariablen enthaltenden Speicherbereiches eine absolute Adresse (adres) eines jeweiligen Regelsegmentwortes gebildet wird, wobei das jeweilige Regelsegmentwort linguistischen Werten der jeweiligen Eingangsvariablen in dem zum jeweiligen Regelsegmentwort gehörenden Bedingungsteil der jeweiligen Regeln entspricht,

bei dem in einem fünften Schritt die jeweilige Relativadresse (ad) zur Adressierung eines Regelsegmentwortes nur dann in die durch den Eingabezeiger adressierte Zelle des Adreßspeichers zurückgeschrieben und anschließend die Postion des Eingabezeigers nur dann um eine Zelle des Adreßspeichers weitergeschaltet wird, wenn mindestens eine der durch das jeweilige adressierte Regelsegmentwort definierten Bedingungen für die jeweilige Eingangsvariable erfüllt ist,

bei dem in einem sechsten Schritt die Schritte 3 bis 5 wiederholt werden, bis der Wert des Ausgabezeigers den Wert der maximalen Eingabezeigerposition der jeweilis vorhergehenden Eingangsvariablen erreicht hat und dann der jeweilige Wert der maximalen Eingangszeigerposition der vorhergehenden Eingangsvariable gleich dem Wert der aktuellen Position des Eingabezeigers gesetzt, und die Relativadresse (ada) zur Adressierung der jeweiligen Eingangsvariable so erhöht wird,
daß die jeweils nächste Eingangsvariable adressiert wird und

bei dem die Schritte 2 bis 6 durchgeführt werden bis alle (nev) Eingangsvariable abgearbeitet sind.

2. Vorrichtung zur Durchführung des Verfahrens nach Anspruch 1,

bei der eine Ausblendeinrichtung (SONAR), die die jeweilige Relativadresse (ad) für das jeweilige Regelsegment liefert, mit einem Adreßspeicher (DPRAM), bei dem ein Signal am Datenausgang ($D_{out}$) verzögert und abhängig von einem Steuersignal (zw) am Dateneingang ($D_{in}$) zurückgeführt ist, ein Zähler (CNT_a) für den Ausgabezeiger und einem Zähler (CNT_e) für den Eingabezeiger vorgesehen sind,

bei der eine Adreßbildungseinheit (ADR) mit einem Zähler (CNT_f) für die Eingangsvariablen vorgesehen ist, in der aus der Relativadresse (ad), der Startadresse (KBD2), der Anzahl von Regelsegmentworten (apev) und der Anzahl (nev) von Eingangsvariablen die absolute Adresse (adres) bildbar ist, bei der ein Wissensbasisspeicher (KBM) vorgesehen ist, bei dem durch die absolute Adresse Regelsegmentworte adressiert und auslesbar sind,

bei der ein Regeldecoder (RDEC) vorgesehen ist, in dem eine Nummer (ne) für einen linguistischen Wert der jeweiligen Eingangsvariablen mit mindestens einer Nummer (re) des jeweiligen Regelsegmentwortes verglichen und ein jeweiliges Treffersignal (hit) für jede Nummer des jeweiligen Regelsegmentwortes gebildet ist, wobei ein Regelsegment einer Nummer eines linguistischen Wertes entspricht, und

bei der eine Einrichtung (HITW) zur Erkennung weiterhin relevanter Regelsegmentworte vorgesehen ist, in der in Abhängigkeit von Treffersignalen (hit) für die Nummern eines jeweiligen Regelsegmentwortes das Steuersignal (zw) gebildet ist.

3. Vorrichtung nach Anspruch 2,

bei der die Ausblendeinrichtung (SONAR) einen Adreßspeicher (DPRAM) in Form eines Dual-Ported-RAM aufweist, dessen Dateneingang ($D_{in}$) eine verzögerte Relativadresse (adrv) enthält, die durch drei in Reihe geschaltete Register (REG2 ... REG4) aus der Relativadresse (ad) für das jeweilige Regelsegmentwort bilder ist, dessen Eingabeadreßeingang ($A_{in}$) ein Ausgangssignal (cne) des Zähler (CNT_e) für den Eingabezeiger zuführbar ist, dessen Datenausgang ($D_{out}$) mit einem Null-Eingang eines Multiplexers (MUX) verbunden ist, dessen Ausgabeadreßeingang ($A_{out}$) ein Ausgangssignal (cna) des Zählers (CNT_a) für den Ausgabezeiger zuführbar ist und dessen Ausgabeadreßeingang mit einem Eins-Eingang des Multiplexers (MUX) verbunden ist, dessen Ausgang die Relativadresse (ad) für das jeweilige Regelsegmentwort führt,

bei der ein Schreibsignal (wr), das das Einschreiben der verzögerten Relativadresse (adrv) in den Adreßspeicher (DPRAM) ermöglicht, in Abhängigkeit des Steuersignals (zw) gebildet ist,

bei der in einer Identitätsvergleicherschaltung (E) ein erstes Stopsignal (stop1) erzeugt ist, wenn das Ausgangssignal (cna) des Zählers (CNT_a) für den Ausgabezeiger gleich der Anzahl (apev) der Regelsegmentworte ist,

bei der ein Halteglied (LAT) vorgesehen ist, an dessen Eingang das Ausgangssignal (cne) des Zählers für den Eingabezeiger liegt und dessen Ausgang ein Ausgangssignal (ees) führt, das dem Wert für die jeweils letzte Eingabezeigerposition vor einem Wechsel zur nächsten Eingangsvariablen entspricht, und

bei der ein Kleiner-Komparator (COMP) mit der Vergleichsbedingung a < b vorgesehen ist, dessen a-Eingang das Ausgangssignal (ees) des Halteglieds, dessen b-Eingang das Ausgangssignal (cna) des Zählers (CNT_a) für den Ausgabezeiger erhält und an dessen Ausgang ein zweites Stopsignal (stop 2) gebildet ist, wodurch angezeigt wird, daß eine jeweilige Eingangsvariable abgearbeitet ist.

4. Vorrichtung nach einem der Ansprüche 2 oder 3,

bei der die Adreßbildungseinheit (ADR) zur Adressierung der jeweiligen Eingangsvariablen, einen Zähler (CNT_f) eine Subtraktionsschaltung (SUB), eine Multipliaktionsschaltung (MULT) und eine Addierschaltung (ADD) aufweist,

bei der der Substraktionsschaltung (SUB) als Minuend die Anzahl (nev) der Eingangsvariablen und als Subtrahent ein Ausgangssignal (zl) des Zählers (CNT_f) zur Numerierung der jeweiligen Eingangsvariablen zuführbar sind,

bei der einem ersten Eingang einer Multiplikationsschaltung (MULT) das Ausgangssignal der Substraktionsschaltung (SUB) und einem zweiten Eingang der Multiplikationsschaltung die Anzahl (apev) der Regelsegmentwörter zuführbar sind und daraus die Relativadresse (ada) eines die Regelsegmentwörter der jeweiligen Eingangsvariablen enthaltenden Speicherbereiches gebildet ist, und

bei der der Addierschaltung (ADD) die Relativadresse (ada) eines die Regelsegmentwörter der jeweiligen Eingangsvariablen enthaltenden Speicherbereiches, die Startadresse (KBD2) und die Relativadresse (ad) zur Adressierung von Regelsegmentworten zuführbar sind und am Ausgang der Addierschaltung die absolute Adresse (adres) zur Adressierung des Wissensbasisspeichers (KBM) gebildet ist.

5. Vorrichtung nach Anspruch 4, bei der eine NOR-Schaltung (NOR) vorgesehen ist, deren jeweilige Eingänge mit Leitungen des Ausgangs der Subtrahierschaltung (SUB) verbunden sind, die die einzelnen Bits des Wertes des Ausgangs der Subtrahierschaltung führen und deren Ausgang ein Signal (last) liefert, das angibt, daß eine letzte Eingangsvariable vorliegt.

6. Vorrichtung nach einem der Ansprüche 2 bis 5,

bei der die Einrichtung (HITW) zur Erkennung weiterhin relevanter Regelsegmentworte eine ODER-Schaltung (OR1), ein Register (REG1) und für jedes Regelsegment eines Regelsegmentwortes eine UND-Schaltung (A1 ... A4) enthält,

bei der in den UND-Schaltungen jeweils aus einem Treffersignal (hitp(l, k) .. hitp (l, k+3)) für Regelsegmente der vorhergehenden Eingangsvariablen und einem Treffersignal (hit (l, k) ... hit (l, k+3)) für ein Regelsegment der jeweiligs aktuellen Eingangsvariablen Treffersignale (hitz) für alle Regelsegmente bis zur jeweiligs aktuellen Eingangsvariablen gebildet sind sind,

bei der die Treffersignale (hitz) für Regelsegmente bis zur jeweiligs aktuellen Eingangsvariablen in Zellen eines Schreib/Lese-Speichers (RAM) einschreibbar und im nächsten Zyklus als Treffersignale (hitp) aller vorhergehenden Eingangsvariablen wieder auslesbar sind, die durch die in der Ausblendeinrichtung (SONAR) erzeugte verzögerte Relativadresse (adrv) adressiert sind, und

bei der jeweils ein Treffersignal (hitz) für Regelsegmente bis zur jeweiligs aktuellen Eingangsvariablen einem Eingang der ODER-Schaltung (OR1) und das Ausgangssignal (zwp) der ODER-Schaltung einem Eingang des Registers zuführbar ist und das Steuersignal (zw) das Ausgangssignal des Registers bildet.

**Claims**

1.  Process for accelerated rule evaluation,

    in which in a first step a relative address (ada) for addressing an area of memory associated with respective input variables is produced in such a way that a first input variable is addressed, a value for a maximum input pointer position of the respective preceding input variable is set equal to the number (apev) of all the rule segment words (RW1 ... RWapev) and an address memory (DPRAM) is loaded with relative addresses of all the rule segment words, a rule segment word being composed of at least one rule segment,
    in which in a second step an input pointer (EZ) and an output pointer (AZ) are set such that in each case a first cell of the address memory is addressed,
    in which in a third step a respective relative address (ad) for addressing a rule segment word is read out from that memory cell of the address memory which is addressed by the output pointer and the position of the output pointer is then incremented by one cell of the address memory,
    in which in a fourth step, an absolute address (adres) of a respective rule segment word is formed from the respective relative address (ad) for addressing a rule segment word, a start address (KBD2) and a relative start address (ada) of an area of memory containing the rule segment words of the respective input variables, the respective rule segment word corresponding to linguistic values of the respective input variable in the condition part, associated with the respective rule segment word, of the respective rules,
in which in a fifth step the respective relative address (ad) for addressing a rule segment word is only written back into that cell of the address memory which is addressed by the input pointer and then the position of the input pointer is only incremented by one cell of the address memory if at least one of the conditions defined by the respective addressed rule segment word is fulfilled for the respective input variable,
in which in a sixth step the steps 3 to 5 are repeated until the value of the output pointer has reached the value of the maximum input pointer position of the respective preceding input variable and the respective value of the maximum input pointer position of the preceding input variable is then set equal to the value of the current position of the input pointer, and the relative address (ada) for addressing the respective input variable is increased such that the respective next input variable is addressed and
in which the steps 2 to 6 are carried out until all (nev) input variables have been processed.

2.  Device for carrying out the process as claimed in Claim 1,

    in which provision is made for a screening device (SONAR), which supplies the respective relative address (ad) for the respective rule segment, having an address memory (DPRAM) in which a signal at the data output ($D_{out}$) is delayed and fed back as a function of a control signal (zw) at the data input ($D_{in}$), for a counter (CNT a) for the output pointer and for a counter (CNT_e) for the input pointer,
    in which provision is made for an address formation unit (ADR) having a counter (CNT_f) for the input variables,
    in which unit the absolute address (adres) can be formed from the relative address (ad), the start address (KBD2), the number of rule segment words (apev) and the number (nev) of input variables, in which provision is made for a knowledge base memory (KBM), in which rule segment words are addressed and can be read out by means of the absolute address,
    in which provision is made for a rule decoder (RDEC) in which a number (ne) for a linguistic value of the respective input variable is compared with at least one number (re) of the respective rule segment word and a respective hit signal (hit) is formed for each number of the respective rule segment word, one rule segment corresponding to one number of a linguistic value, and

in which provision is made for a device (HITW) for detecting rule segment words which continue to be relevant, in which device the control signal (zw) is formed as a function of hit signals (hit) for the numbers of a respective rule segment word.

3. Device as claimed in Claim 2,

in which the screening device (SONAR) has an address memory (DPRAM) in the form of a dual-ported RAM, whose data input ($D_{in}$) contains a delayed relative address (adrv), which can be formed by three registers (REG2 ... REG4) from the relative address (ad) for the respective rule segment word whose input address input ($A_{in}$) can be fed an output signal (cne) of the counter (CNT e) for the input pointer, whose data output ($D_{out}$) is connected to a null input of a multiplexer (MUX), whose output address input ($A_{out}$) can be fed an output signal (cna) of the counter (CNT_a) for the output pointer, and whose output address input is connected to a one-input of the multiplexer (MUX), whose output carries the relative address (ad) for the respective rule segment word,

in which a write signal (wr), which enables the writing of the delayed relative address (adrv) into the address memory (DPRAM), is formed as a function of the control signal (zw),

in which, in an identity comparison circuit (E), a first stop signal (stop1) is generated if the output signal (cna) of the counter (CNT_a) for the output pointer is equal to the number (apev) of rule segment words,

in which provision is made for a hold element (LAT), at whose input the output signal (cne) of the counter for the input pointer is present and whose output carries an output signal (ees) which corresponds to the value for the respective last input pointer position before a change to the next input variable, and

in which a smaller-than comparator (COMP) is provided with the comparison condition a < b, whose a-input receives the output signal (ees) of the hold element, whose b-input receives the output signal (cna) of the counter (CNT_a) for the output pointer, and at whose output a second stop signal (stop2) is formed, by which means it is indicated that a respective input variable has been processed.

4. Device as claimed in either of Claims 2 and 3,

in which the address formation unit (ADR) has, for the purposes of addressing the respective input variable, a counter (CNT_f), a subtraction circuit (SUB), a multiplication circuit (MULT) and an adder circuit (ADD), in which the subtraction circuit (SUB) can be fed, as minuend, the number (nev) of input variable and, as subtrahend, an output signal (z1) of the counter (CNT_f) for numbering the respective input variable,

in which a first input of a multiplication circuit (MULT) can be fed the output signal of the subtraction circuit (SUB) and a second input of the multiplication circuit can be fed the number (apev) of rule segment words and the relative address (ada) of an area of memory containing the rule segment words of the respective input variable can be formed therefrom, and

in which the adder circuit (ADD) can be fed the relative address (ada) of an area of memory containing the rule segment words of the respective input variables, the start address (KBD2) and the relative address (ad) for addressing rule segment words, and the absolute address (adres) for addressing the knowledge base memory (KBM) is formed at the output of the adder circuit.

5. Device as claimed in Claim 4,
in which provision is made for a NOR circuit (NOR), whose respective inputs are connected to lines of the output from the subtraction circuit (SUB) which carry the individual bits of the value of the output of the subtraction circuit, and whose output supplies a signal (last) which specifies that a last input variable is present.

6. Device as claimed in one of Claims 2 to 5,

in which the device (HITW) for detecting rule segment words which continue to be relevant contains an OR circuit (OR1), a register (REG1) and an AND circuit (A1 ... A4) for each rule segment of a rule segment word,

in which there are formed in the AND circuits, in each case from a hit signal (hitp(l, k) .. hitp (l, k+3)) for rule segments of the preceding input variable and a hit signal (hit (l, k) ... hit (l, k+3)) for a rule segment of the respective current input variables, hit signals (hitz) for all the rule segments up to the respective current input variable,

in which the hit signals (hitz) for rule segments up to the respective current input variable can be written into cells of a read/write memory (RAM) and, in the next cycle, can be read out once more as hit signals (hitp) of all the preceding input variables which have been addressed via the delayed relative address (adrv) produced in the screening device (SONAR), and

in which in each case a hit signal (hitz) for rule segments up to the respective current input variable can be fed to an input of the OR circuit (OR1) and the output signal (zwp) of the OR circuit can be fed to an input of the register, and the control signal (zw) forms the output signal of the register.

## Revendications

1. Procédé d'évaluation accélérée de règles,

dans lequel une adresse relative (ada) pour l'adressage d'une zone de mémoire appartenant aux variables d'entrée correspondantes est générée dans une première étape, de sorte qu'une première variable d'entrée soit adressée, qu'une valeur pour une position maximale du pointeur d'entrée des variables d'entrée précédentes respectives soit positionnée pour être égale au nombre (apev) de la totalité des mots de segments de règles (RW1 ... Rwapev) et qu'une mémoire d'adresses (DPRAM) soit chargée d'adresses relatives de la totalité des mots de segments de règles, un mot de segments de règles étant composé d'au moins un segment de règles,

dans lequel un pointeur d'entrée (EZ) et un pointeur de sortie (AZ) sont réglés dans une seconde étape, de sorte à adresser respectivement une première cellule de la mémoire d'adresses,

dans lequel une adresse relative (ad) correspondante pour l'adressage d'un mot de segments de règles est extraite dans une troisième étape de la cellule de la mémoire d'adresses adressée par le pointeur de sortie et dans lequel la position du pointeur de sortie est ensuite avancée d'une cellule de la mémoire d'adresses,

dans lequel une adresse absolue (adres) d'un mot de segments de règles correspondant est formée dans une quatrième étape à partir de l'adresse relative (ad) correspondante pour l'adressage d'un mot de segments de règles, d'une adresse de lancement (KBD2) et d'une adresse de lancement relative (ada) d'une zone de mémoire contenant les mots de segments de règles des variables d'entrée correspondantes, le mot de segments de règles concerné correspondant à des valeurs linguistiques des variables d'entrée concernées dans le mot de segments de règles correspondant appartenant à la partie conditionnelle des règles correspondantes,

dans lequel l'adresse relative (ad) correspondante pour l'adressage d'un mot de segments de règles n'est réinscrite dans une cinquième étape dans la cellule de la mémoire d'adresses adressée par le pointeur d'entrée et dans lequel la position du pointeur d'entrée n'est avancée d'une cellule de la mémoire d'adresses, que si au moins l'une des conditions définies par le mot de segments de règles correspondant adressé est remplie pour la variable d'entrée correspondante,

dans lequel les étapes 3 à 5 sont répétées dans une sixième étape jusqu'à ce que la valeur du pointeur de sortie ait atteint la valeur de la position maximale du pointeur d'entrée des variables d'entrée précédentes correspondantes et jusqu'à ce que la valeur correspondante de la position maximale du pointeur d'entrée de la variable d'entrée précédente soit positionnée de manière à égaler la valeur de la position actuelle du pointeur d'entrée et que l'adresse relative (ada) pour l'adressage de la variable d'entrée correspondante soit augmentée de sorte que la variable d'entrée suivante correspondante soit adressée et

dans lequel les étapes 2 à 6 sont exécutées jusqu'à ce que toutes les variables d'entrée (nev) soient traitées.

2. Dispositif pour la mise en oeuvre du procédé selon la revendication 1,

dans lequel un dispositif de filtrage (SONAR), qui fournit l'adresse relative (ad) correspondante pour le segment de règles correspondant, avec une mémoire d'adresses (DPRAM), dans laquelle un signal est temporisé à la sortie des données ($D_{out}$) est remis à son état initial en fonction d'un signal de commande (zw) à l'entrée des données ($D_{in}$), et dans lequel un compteur (CNT_a) pour le pointeur de sortie et un compteur (CNT_e) pour le pointeur d'entrée sont prévus,

dans lequel une unité de formation d'adresses (ADR) comportant un compteur (CNT_f) pour les variables d'entrée est prévu, dans lequel l'adresse absolue (adres) peut être formée à partir de l'adresse relative (ad), de l'adresse de lancement (KBD2), du nombre de mots de segments de règles (apev) et du nombre (nev) de variables d'entrée, dans lequel une mémoire de base de connaissances (KBM) est prévue, dans lequel des mots de segments de règles sont adressés et peuvent être extraits par le biais de l'adresse absolue,

dans lequel un décodeur de règles (RDEC) est prévu, dans lequel un numéro (ne) pour une valeur linguistique des variables d'entrée correspondantes est comparée à au moins un numéro (re) du mot de segments de règles correspondant et un signal de succès (hit) correspondant est formé pour chaque numéro du mot de segments de règles correspondant, un segment de règles correspondant à un numéro d'une valeur linguistique, et

dans lequel un dispositif (HITW) de détection de mots de segments de règles toujours pertinents est prévu, dans lequel le signal de commande (zw) est formé en fonction de signaux de succès (hit) pour les numéros d'un mot de segments de règles correspondant.

3. Dispositif selon la revendication 2,

dans lequel le dispositif de filtrage (SONAR) comporte une mémoire d'adresses (DPRAM) sous forme d'une RAM à double accès, dont l'entrée de données ($D_{in}$) contient une adresse relative (adrv) temporisée, qui peut être formée par trois registres montés en série (REG2 ... REG4) à partir de l'adresse relative (ad) pour le mot de segments de règles correspondant, à l'entrée d'adresses d'entrées ($A_{in}$) duquel un signal de sortie (cne) du compteur (CNT_e) pour le pointeur d'entrée peut être alimenté, dont la sortie de données ($D_{out}$) est connectée à une entrée zéro d'un multiplexeur (MUX), à l'entrée d'adresses de sortie ($A_{out}$) duquel un signal de sortie (cna) du compteur (CNT_a) pour le pointeur de sortie peut être alimenté et dont l'entrée d'adresses de sortie est connectée à une entrée un du multiplexeur (MUX), dont la sortie conduit l'adresse relative (ad) pour le mot de segments de règles correspondant,

dans lequel un signal d'écriture (wr), qui permet d'inscrire l'adresse relative (adrv) temporisée dans la mémoire d'adresses (DPRAM), est formé en fonction du signal de commande (zw),

dans lequel un premier signal d'arrêt (stop1) est généré dans un circuit comparateur logique (E), lorsque le signal de sortie (cna) du compteur (CNT_a) pour le pointeur de sortie est égal au nombre (apev) de mots de segments de règles,

dans lequel un élément d'arrêt (LAT) est prévu, à l'entrée duquel le signal de sortie (cne) du compteur pour le pointeur d'entrée est présent et dont la sortie conduit un signal de sortie (ees), qui correspond à la valeur pour la dernière position respective du pointeur d'entrée avant un passage aux variables d'entrée suivantes, et

dans lequel un comparateur Kleiner (COMP) doté de la condition de comparaison a < b est prévu, dont l'entrée a reçoit le signal de sortie (ees) de l'élément d'arrêt, dont l'entrée b reçoit le signal de sortie (cna) du compteur (CNT_a) pour le pointeur de sortie et à la sortie duquel est formé un second signal d'arrêt (stop 2), ces moyens indiquant le traitement d'une variable d'entrée correspondante.

4. Dispositif selon l'une des revendications 2 ou 3,

dans lequel l'unité de formation d'adresses (ADR) pour l'adressage des variables d'entrée correspondantes comporte un compteur (CNT_f) un circuit soustracteur (SUB), un circuit multiplicateur (MULT) et un circuit additionneur (ADD),

dans lequel le nombre (nev) de variables d'entrée comme minuend et un signal de sortie (zl) du compteur (CNT_f) pour la numérotation des variables d'entrée correspondante comme diminuteur peuvent alimenter le circuit soustracteur (SUB),

dans lequel le signal de sortie du circuit soustracteur (SUB) peut alimenter une première entrée d'un circuit multiplicateur (MULT) et le nombre (apev) de mots de segments de règles peut alimenter une seconde entrée du circuit multiplicateur et à partir desquels l'adresse relative (ada) d'une zone de mémoire contenant les mots de segments de règles des variables d'entrée correspondantes est formée, et

dans lequel l'adresse relative (ada) d'une zone de mémoire contenant les mots de segments de règles des variables d'entrée correspondantes, l'adresse de lancement (KBD2) et l'adresse relative (ad) pour l'adressage des mots de segments de règles peuvent alimenter le circuit additionneur (ADD) et dans lequel l'adresse absolue (adres) pour l'adressage de la mémoire de base des connaissances (KBM) est formée à la sortie du circuit additionneur.

5. Dispositif selon la revendication 4, dans lequel un circuit NON- ou (NON-ou) est prévu, dont les entrées correspondantes sont connectées à des lignes de la sortie du circuit soustracteur (SUB), qui conduisent les bits individuels de la valeur de la sortie du circuit soustracteur et dont la sortie délivre un signal (last) qui indique la présence d'une dernière variable d'entrée.

6. Dispositif selon l'une des revendications 2 à 5,

dans lequel le dispositif (HITW) de détection de mots de segments de règles toujours pertinents contient un circuit OU (OR1), un registre (REG1) et un circuit ET (A1 ... A4) pour chaque segment de règles d'un mot de segments de règles,

dans lequel des signaux de succès (hitz) pour tous les segments de règles jusqu'aux variables d'entrée actuelles correspondantes sont formés dans les circuits ET respectivement à partir d'un signal de succès (hitp(1, k) .. hitp (1, k+3)) pour segments de règles des variables d'entrée précédentes et à partir d'un signal de succès (hit (1, k) ... hit (1, k+3)) pour un segment de règles des variables d'entrée actuelles correspondantes,

dans lequel les signaux de succès (hitz) pour segments de règles sont inscriptibles dans des cellules d'une mémoire à écriture/lecture (RAM) jusqu'aux variables d'entrée actuelles correspondantes et qui peuvent être à nouveau extraits au cycle suivant comme signaux de succès (hitp) de toutes les variables d'entrée précédentes, adressées au moyen de l'adresse relative temporisée (adrv) générée dans le dispositif de filtrage (SONAR) et

dans lequel un signal de succès (hitz) pour segments de règles peut alimenter une entrée du circuit OU (OR1) jusqu'aux variables d'entrée actuelles correspondantes et dans lequel le signal de sortie (zwp) du circuit OU peut alimenter une entrée du registre et dans lequel le signal de commande (zw) forme le signal de sortie du registre.

## FIG 1

EP 0 721 618 B1

FIG 2

RS

| | EV 1 | EV 2 | EV l | EV nev – 1 | EV nev | AV |
|---|---|---|---|---|---|---|
| RW1 | | | | | | |
| R 1 | X | | . . . . | | | |
| R 2 | X | | . . . . | | | |
| R 3 | X | | . . . . | | | |
| R 4 | X | | . . . . | | | |
| R 5 | | | . . . . | | | |
| R k | | | | | | |
| R nr – 4 | | | . . . . | | | |
| R nr – 3 | X | X | . . . . | | | |
| R nr – 2 | | X | . . . . | | | |
| R nr – 1 | | X | . . . . | | | |
| R nr | | X | . . . . | | | |

RW apev

KBM

EZ ——→
AZ ——→     SRS (nev -3)        KBD2 +ad

EZ' ——→
AZ' ——→     SRS (nev -2)        (nev -3)*apev +ad

FIG 3          SRS (nev - 1)      (nev -2)*apev +ad

              SRS (nev)          (nev -1)*apev +ad

FIG 4

hit(l.k)    hit(l.k+1)    hit(l.k+2)    hit(l.k+3)

hitp(l.k)   hitp(l.k+1)   hitp(l.k+2)   hitp(l.k+3)

&           &           &           &

A1          A2          A3          A4

T1          T2          T3          T4

hitz(l.k)   hitz(l.k+1)   hitz(l.k+2)   hitz(l.k+3)

4

4          zwp    REG 1
≥ 1         I M        S  0       zw

4  hitz    OR1

RAM        cls_m        cls_s
4*64

FIG 5

# FIG 6